# EUROPEAN PATENT APPLICATION

(11) **EP 4 507 266 A1**
(43) Date of publication of application: **12.02.2025**
(21) Application number: 23779307.0
(22) Date of filing: 07.03.2023
(51) Int. Cl.: H04L 43/18, G05B 19/05, H04L 67/02

(54) **INFORMATION PROCESSING DEVICE, AND PROGRAM**

(30) Priority: 01.04.2022 JP 2022061821
(71) Applicant: OMRON Corporation, Kyoto 600-8530 (JP)
(72) Inventor: ISHIHARA, Hiromi, Kyoto-shi, Kyoto 600-8530 (JP)
(74) Representative: Mewburn Ellis LLP
(86) International application number: PCT/JP2023/008542
(87) International publication number: WO 2023/189280

(57) **Abstract**

Information for supporting grasping of a type of a communication protocol used by a control device is provided. An information processing apparatus includes: a communication unit configured to communicate with a control device configured to control a target; a communication protocol determination unit configured to determine, based on information exchanged through communication with the control device, a type of a communication protocol used for the communication by the control device; and an output unit configured to output the type of the communication protocol determined by the communication protocol determination unit.

## Description

### TECHNICAL FIELD

The present technology relates to: an information processing apparatus that communicates with a control device configured to control a target; and a program.

### BACKGROUND ART

A control device disclosed in Japanese Patent Laying-Open No. 2020-149391 (PTL 1) includes: a control unit configured to execute a control arithmetic operation for controlling a control target; a communication unit configured to execute a process for a secure communication through the use of a certificate; a detection unit configured to detect that the certificate is close to expire; and a notification unit configured to give a notification indicating that the certificate is close to expire. The notification unit causes a screen of a human machine interface (HMI) to display the notification.

### CITATION LIST

### PATENT LITERATURE

PTL 1: Japanese Patent Laying-Open No. 2020-149391

### SUMMARY OF INVENTION

### TECHNICAL PROBLEM

Since a display of an HMI and the like in factory automation (FA) is configured to provide a user interface (UI) including a screen based on the information exchanged through communication with a control device, users can remotely monitor the operation status of the control device based on the information provided by the UI. Thus, in order to improve the quality of the information, the users have a demand to check the type of the communication protocol used for communication of the information provided by the screen.

Therefore, an object of the present invention is to provide information that supports grasping of a type of a communication protocol used by a control device.

### SOLUTION TO PROBLEM

An information processing apparatus according to the present disclosure includes: a communication unit configured to communicate with a control device configured to control a target; a communication protocol determination unit configured to determine, based on information exchanged through communication with the control device, a type of a communication protocol used for the communication by the control device; and an output unit configured to output the determined type of the protocol.

According to the above disclosure, the information processing apparatus itself determines the type of the communication protocol used by the control device based on the information exchanged through communication with the control device, and then, outputs the determined type of the communication protocol. Thereby, the information processing apparatus can provide information that supports grasping of the type of the communication protocol used by the control device.

In the above disclosure, the output unit includes a display unit configured to display a screen constituted of one or more objects, and the objects include an object representing the type of the communication protocol to be output.

According to the above disclosure, the information about the type of the communication protocol used by the control device can be provided as an object constituting the screen.

In the above disclosure, when the communication unit requests the control device to establish a connection for communication, the communication protocol determination unit determines, based on the information exchanged through communication with the control device, the type of the communication protocol used for the communication by the control device.

According to the above disclosure, the information processing apparatus can determine the type of the communication protocol used by the control device when requesting the control device to establish a connection for communication.

In the above disclosure, the type of the communication protocol used for the communication by the control device includes a secure communication protocol or a non-secure communication protocol.

According to the above disclosure, the information processing apparatus can determine the communication protocol from the secure communication protocol or the non-secure communication protocol as a type of the communication protocol used by the control device.

**In** the above disclosure, the communication unit is configured to be capable of communicating with a plurality of the control devices, the communication protocol determination unit is configured to determine, based on information exchanged through communication between each of the control devices and the information processing apparatus, the type of the communication protocol used for the communication by each of the control devices, and the type of the communication protocol to be output includes an aggregation type that is an aggregation of the types of the communication protocols determined for the control devices.

According to the above disclosure, when communicating with each of the plurality of control devices, the information processing apparatus can output an aggregation type that is an aggregation of the types of the communication protocols determined for the control devices.

**In** the above disclosure, the information exchanged through communication with the control device includes control information related to control of the target, the output unit includes a display unit configured to display a screen constituted of one or more objects, and the one or more objects include an object representing the control information.

According to the above disclosure, it is possible to output, on a display screen, an object of the type of the communication protocol determined for the control device and an object representing the information used by the control device for controlling the target.

In the above disclosure, the aggregation type includes a communication protocol that is an aggregation of the types of the communication protocols each determined for the control device configured to communicate the control information represented by each of the objects constituting the screen.

According to the above disclosure, as the aggregation information of the communication protocols displayed on the screen, it is possible to indicate an aggregation of the types of the communication protocols each determined for the control device communicating the control information represented by each of the objects constituting the screen.

In the above disclosure, an object representing the aggregation type includes different types of objects, and, based on a state of arrangement of other objects on a screen, the information processing apparatus determines an object representing the aggregation type to be arranged on the screen from among the different types of objects.

According to the above disclosure, the object representing the aggregation type can be determined from among different types of objects, and this determination can be made based on the state of arrangement of other objects on the screen.

In the above disclosure, the different types of objects include at least two of: an object having a predetermined color representing a frame of the screen; a semi-transparent object arranged to be superimposed on other objects arranged on the screen; and an object of an icon representing the aggregation type, the object of the icon being arranged at a predetermined position on the screen.

According to the above disclosure, the object representing the aggregation type can be determined from at least two of: an object having a predetermined color representing a frame of the screen; a semi-transparent object arranged to be superimposed on other objects arranged on the screen; and an object of an icon representing the aggregation type, the object of the icon being arranged at a predetermined position on the screen.

In the above disclosure, in a case where the object of the icon representing the aggregation type is arranged on the screen, when the icon is operated, an object representing information of the control device using a predetermined type of communication protocol is arranged on the screen.

According to the above disclosure, in the case where the object of the icon representing the aggregation type is arranged on the screen, in response to the operation of the icon, the information processing apparatus can present the information of the control device using the predetermined type of communication protocol among the plurality of control devices.

In the above disclosure, the object arranged on the screen includes an object representing: control information related to control of the target and exchanged through communication with the control device; and the type of the communication protocol determined for the control device.

According to the above disclosure, the information processing apparatus can cause the screen to display: an object representing the control information related to control executed for the target by the control device; and an object representing the type of the communication protocol determined for the control device.

In the above disclosure, the information processing apparatus further includes a storage unit configured to store screen data for displaying the screen, the screen data includes: an attribute of each object arranged on the screen, the attribute being related to display; and logic executed to determine an attribute value that is a value of the attribute, and the logic includes logic configured to acquire the aggregation type and arrange an object of the acquired aggregation type on the screen.

According to the above disclosure, based on the stored screen data, the information processing apparatus can acquire: the attribute of the object constituting the screen; and the logic for acquiring the aggregation information and arranging the acquired aggregation information on the screen as the object.

In another aspect of the present disclosure, an information processing apparatus configured to create screen data for displaying the screen is provided.

According to the above disclosure, the information processing apparatus can create screen data for outputting, to the screen, an object indicating the type of the communication protocol used by the control device. This makes it possible to provide information that supports grasping of the type of the communication protocol used by the control device.

In still another aspect of the present disclosure, a program for causing a computer to execute an information processing method is provided. The information processing method includes: communicating with a control device configured to control a target; determining, based on information exchanged through communication with the control device, a type of a communication protocol used for the communication by the control device; and outputting the determined type of the communication protocol.

According to the above disclosure, when the computer executes the program, the computer determines the type of the communication protocol used by the control device based on the information exchanged through communication with the control device and outputs the determined type of the communication protocol. Thereby, the computer can provide information that supports grasping of the type of the communication protocol used by the control device.

### ADVANTAGEOUS EFFECTS OF INVENTION

The present disclosure makes it possible to provide information that supports grasping of the type of the communication protocol used by the control device.

### BRIEF DESCRIPTION OF DRAWINGS

Fig. 1 is a schematic diagram showing an overall configuration of a control system SYS in FA according to an embodiment.
Fig. 2 is a diagram showing a hardware configuration example of a display 4 according to the present embodiment.
Fig. 3 is a diagram showing a hardware configuration example of a support device according to the present embodiment.
Fig. 4 is a diagram schematically showing a functional configuration of a display 4 and a support device 300 according to a first embodiment.
Fig. 5 is a schematic diagram showing a functional configuration example of display 4 according to the present embodiment.
Fig. 6 is a diagram showing an example of screen data 611 according to the present embodiment.
Fig. 7 is a diagram showing another example of screen data 611 according to the present embodiment.
Fig. 8 is a flowchart illustrating a schematic process of screen creation according to the present embodiment.
Fig. 9 is a diagram showing a display example of a screen according to the present embodiment.
Fig. 10 is a diagram showing a display example of the screen according to the present embodiment.
Fig. 11 is a diagram showing a display example of the screen according to the present embodiment.
Fig. 12 is a diagram showing a display example of the screen according to the present embodiment.
Fig. 13 is a diagram showing a display example of the screen according to the present embodiment.
Fig. 14 is a diagram showing a display example of the screen according to the present embodiment.
Fig. 15 is a diagram showing a display example of the screen according to the present embodiment.
Fig. 16 is a diagram showing an output example according to the present embodiment.
Fig. 17 is a diagram showing an example of a screen selection process according to the present embodiment.
Fig. 18 is a flowchart of a communication protocol determination process according to the present embodiment.
Fig. 19 is a diagram showing an example of a protocol table 45 according to the present embodiment.
Fig. 20 is a diagram showing an example of a status table 46 according to the present embodiment.
Fig. 21 is a flowchart of a page switching process according to the present embodiment.
Fig. 22 is a diagram showing an example of a change in data in a table according to the present embodiment.
Fig. 23 is a diagram illustrating a process of allocating variables to objects according to the present embodiment.
Fig. 24 is a diagram illustrating a process of allocating variables to objects according to the present embodiment.
Fig. 25 is a diagram showing a display example of another screen according to the present embodiment.

### DESCRIPTION OF EMBODIMENTS

### <A. Application Example>

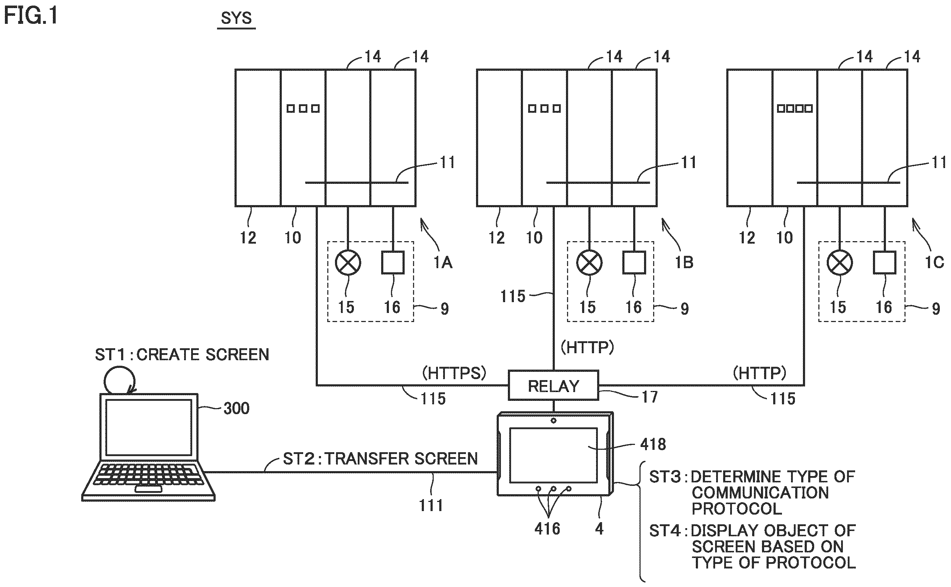

First, an example of a scene to which the present invention is applied will be described with reference to Fig. 1. Fig. 1 is a schematic diagram showing an overall configuration of a control system SYS in FA according to an embodiment. Control system SYS illustrated in Fig. 1 includes: one or more field devices 9; controllers 1A, 1B, and 1C for controlling field devices 9; a display 4 connected to controllers 1A, 1B, and 1C; and a support device 300. Since controllers 1A, 1B, and 1C have the same configuration and function, controllers 1A, 1B, and 1C are collectively referred to as a controller 1 when the configuration and function common to controllers 1A, 1B, and 1C are described.

Field device 9 is one embodiment of a "control target" of controller 1. Field device 9 includes, for example, various industrial devices for automating a production step. By way of example, field device 9 includes a robot controller for controlling an arm robot, a servo driver for controlling a servo motor, a visual sensor for taking pictures of a workpiece, a pressure sensor, a temperature sensor, other devices used in a production step, and the like.

Controller 1 is one of FA devices constituting a network system in factory automation (FA) and is, for example, a computer such as a programmable logic controller (PLC). Controller 1 executes a control program for controlling each of field devices 9 such as a manufacturing apparatus or a manufacturing facility. The control program includes a sequence program including a sequence instruction and/or a motion instruction.

Display 4 is an embodiment of the "information processing apparatus". Display 4 is connected to controller 1 through a network 115.

Display 4 includes what is called a programmable display, a programmable terminal, or the like that is equipped with a user interface on which one or more screens including information related to controller 1 are displayed and through which operations on these one or more screens are received. Display 4 is provided also as an HMI.

Display 4 is connected to one or more controllers 1 connected to network 115 via a relay 17, and is also connected to one or more support devices 300 via a network 111. Networks 111 and 115 include, for example, Ethernet (registered trademark) but are not limited thereto.

Support device 300 provides a user with an application program for display 4, a user program for controller 1, and an environment and various tools for developing screen data of display 4. Support device 300 provides such an environment or tools through a graphical user interface (GUI). Support device 300 is an example of an information processing apparatus configured to include a general-purpose computer, and may be a stationary-type computer device or a computer device such as a portable smartphone, a laptop, or a tablet. Support device 300 may be detachably mounted in display 4 through a universal serial bus (USB) or the like.

Controller 1 executes a user program including a control program for a control arithmetic operation. The user program according to the present embodiment is what is called a variable program. In other words, the user program and the input data (a state value described later), the output data (a control command described later), the data for internal calculation and the like, to which the user program refers when it is executed, can be utilized through the use of input variables, output variables, temporary variables, and the like for each of the above-mentioned data.

Controller 1 includes: a CPU unit 10 including a central processing unit (CPU) as an entity for executing a user program; a power supply unit 12 for supplying electric power to CPU unit 10 and the like; and an input/output (IO) unit 14 for exchanging signals with field device 9. IO unit 14 is connected to CPU unit 10 through a system bus 11 so as to be capable of exchanging data with each other. IO unit 14 acquires an output from a detection sensor 15 as a state value of field device 9 or outputs a control command, which is a result of execution of the control arithmetic operation based on the state value in CPU unit 10, to a relay 16 that is field device 9. When relay 16 is driven according to the control command, the state value of relay 16 is acquired by detection sensor 15, the control arithmetic operation based on the acquired state value is executed, and the relay is driven according to the control command based on the control arithmetic operation. Controller 1 periodically repeats the input/output and the control arithmetic operation of the state value and the control command, so that it can continuously control field device 9.

Display 4 includes a touch screen 418 constituting a user interface and operation keys 416 serving as hardware keys. Further, display 4 may be configured to provide another type of key, for example, a software key, which plays a role of any one of operation keys 416, together with or in place of operation keys 416.

In support device 300, the screen data of a screen displayed on touch screen 418 is created (developed) with the use of a support program (step ST1). In support device 300, the screen data is developed by defining an object constituting a screen. The object of the screen includes an object that can be arranged on the screen so as to be an operation target, for example, components such as an icon, a window, a toolbar, a button, a slider, a text, or an edit box. Support device 300 transfers the developed screen data to display 4 (step ST2).

Display 4 causes touch screen 418 to display a screen based on the screen data from support device 300. More specifically, from controller 1, display 4 receives a value of the variable assigned to an object constituting the screen that is being displayed. Then, based on the received value of the variable, display 4 executes business logic included in each object of the screen data on the screen that is being displayed. Based on the attribute value of each object obtained by execution of the business logic, display 4 updates the attribute value of each object on the screen that is being displayed. Thereby, for example, the display state of the object on the screen is updated so as to display the current value of the control command or the state value of field device 9 controlled by controller 1. The user can monitor the latest field value (the information such as a state value or a control command) from the display state of the object on the screen of touch screen 418, and thereby can remotely check the operation state of controller 1.

Display 4 also displays, on touch screen 418, a screen including an object representing the type of the communication protocol used by controller 1 for communication with display 4. More specifically, display 4 itself determines a communication protocol used by controller 1 for communication with display 4 based on the information exchanged through communication with controller 1 via network 115 (step ST3), and establishes a communication based on the determined type of the communication protocol. Based on this determined type of the communication protocol, the business logic of the object on the display screen can be executed. Based on the attribute value of each object obtained by execution of the business logic, display 4 updates the attribute value of each object on the display screen (step ST4). Thereby, the display state of the object on the screen can be changed according to the type of the communication protocol used for communication with display 4 by controller 1 that is the other end of the communication. Based on such a change in the display state of the object, the user can grasp the type of the communication protocol used by controller 1 for communication with display 4.

When display 4 communicates with controller 1, display 4 autonomously determines based on the setting on the controller 1 side whether the communication is a secure communication (HTTPS) or a non-secure communication (HTTP) that is a normal communication, and then, connects the communication through the use of the determined protocol. In other words, even if the user does not explicitly and statically set the communication protocol for display 4, display 4 automatically determines the type of the communication protocol and outputs the determined type of the communication protocol.

In Fig. 1, since the user of display 4 can be notified of whether or not display 4 performs a secure communication with controller 1 as a target to be monitored, the information exchanged by display 4 with controller 1 through communication makes it possible to give the user a sense of security that security is guaranteed or a sense of caution that security is not guaranteed.

In the present embodiment, a hypertext transfer protocol (HTTP) or a hypertext transfer protocol secure (HTTPS) that is employed for secure communication through HTTP is used as a communication protocol used by controller 1 for communication with display 4. The communication protocol used by controller 1 for communication with display 4 is not limited to HTTP and HTTPS.

The environment supported by support device 300 in Fig. 1 may be embedded in display 4. Field device 9 included in the target to be controlled by controller 1 includes industrial devices, i.e., facilities and devices in an industrial plant including FA, and is not limited to devices such as detection sensor 15, relay 16, and the like shown in Fig. 1.

The following describes a more specific application example of the present embodiment.

### <B. Hardware Configuration Example of Display 4>

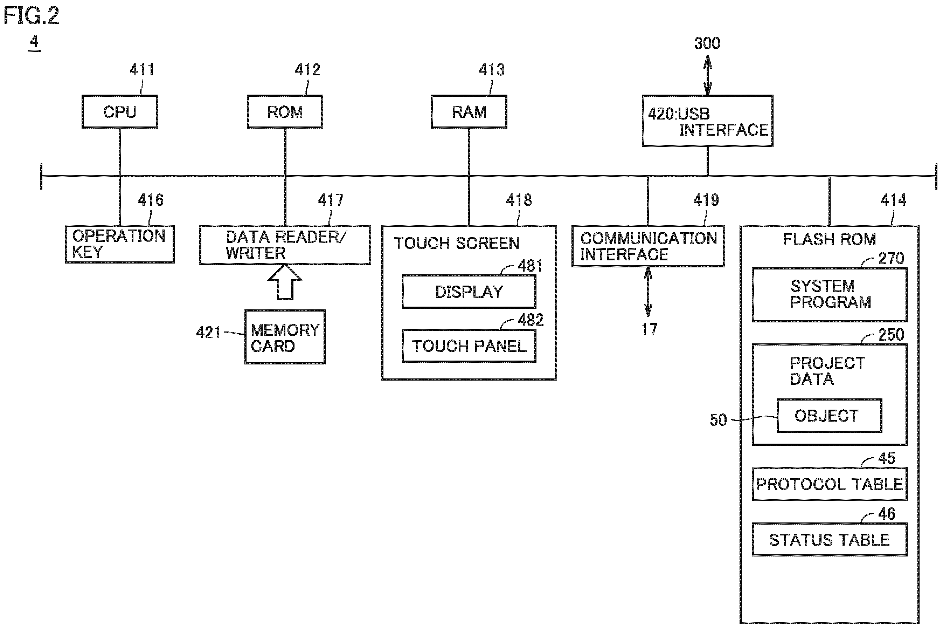

Fig. 2 is a diagram showing a hardware configuration example of display 4 according to the present embodiment. Display 4 may be a stationary type or may be provided in the form of a notebook personal computer excellent in portability at a manufacturing site or the like where controller 1 is disposed.

As shown in Fig. 2, display 4 includes a central processing unit (CPU) 411, a read only memory (ROM) 412, a random access memory (RAM) 413, a flash ROM 414 for storing various programs and data in a nonvolatile manner, operation keys 416 for receiving an operation of a user (a worker), a data reader/writer 417, a touch screen 418, a communication interface 419, and a USB interface 420. These components are connected to each other via an internal bus.

CPU 411 reads programs and data stored in flash ROM 414, and deploys the read programs and data onto RAM 413 for execution thereon to thereby implement various processes. RAM 413 is constituted of a volatile storage device such as a DRAM or an SRAM.

Flash ROM 414 stores, for example, a system program 270, project data 250 including one or more objects 50, a protocol table 45, and a status table 46. Project data 250 corresponds to screen data used for displaying a screen on touch screen 418. In the present embodiment, the "screen data" includes, in association with object 50 arranged on the screen: one or more attributes; and logic constituted of a command executed to determine an attribute value of each attribute. One or more objects are arranged on the screen. In the present embodiment, for each screen displayed on touch screen 418, project data 250 corresponding to the screen is stored in flash ROM 414. For each controller 1 with which display 4 communicates, the identifier of controller 1 and the type of the communication protocol are registered in protocol table 45. The type of the communication protocol registered in this case is determined by display 4 and used by controller 1 for communication with display 4. For each controller 1 with which display 4 communicates, the identifier of controller 1 and the information indicating whether or not controller 1 is in the state allowing communication with display 4 are registered in status table 46. Details of protocol table 45 and status table 46 will be described later.

Project data 250 is constituted of codes executable on display 4. When project data 250 is read and executed, a screen including a picture, a character string, and the like corresponding to object 50 is displayed. An object on the screen serves, for example, to show an image based on a field value exchanged through communication with controller 1, and to execute logic including a code that follows a user operation performed on the object.

Touch screen 418 includes: a display 481 functioning as a display unit; and a touch panel 482 through which an input from the user is received. Communication interface 419 includes circuitry that communicates with an external device including relay 17. USB interface 420 includes circuitry that communicates with support device 300.

Data reader/writer 417 serves as an interface for data transmission between CPU 411 and a memory card 421 that is an example of an external storage medium. Further, other output devices such as a printer may be connected to display 4 as required.

### <C. Hardware Configuration Example of Support Device 300>

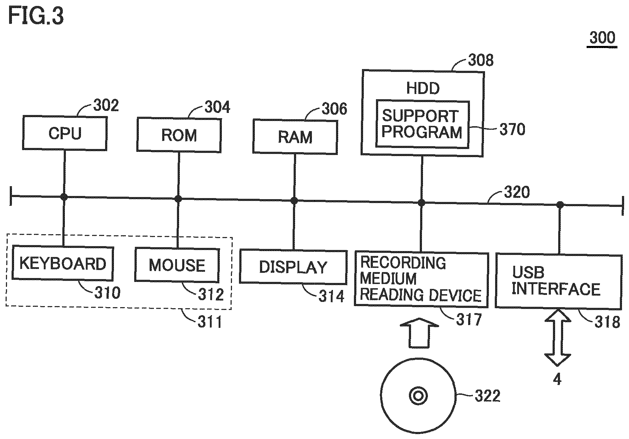

Fig. 3 is a diagram showing a hardware configuration example of a support device according to the present embodiment. Support device 300 may be a stationary type or may be provided in the form of a notebook personal computer excellent in portability at a manufacturing site where controller 1 is disposed.

As shown in Fig. 3, support device 300 includes: a CPU 302 that executes various programs including an operating system (OS); a ROM 304 that stores a basic input/output system (BIOS) and various pieces of data; a RAM 306 that provides a workspace for storing data necessary for execution of the program by CPU 302; and a hard disk (HDD) 308 that stores, in a nonvolatile manner, various programs including a support program 370 and the like executed by CPU 302.

Support device 300 further includes: an input unit 311 including a keyboard 310 and a mouse 312 through which an operation of a user (a developer) is received; and a display 314 for presenting information to the user. Support device 300 includes a USB interface 318 for communication with an external device including controller 1 and display 4. Input unit 311 may be provided as a touch panel integrated with display 314. The components of support device 300 communicate with each other through an internal bus 320.

Support device 300 includes a recording medium reading device 317 onto which a recording medium 322 is removably mounted. From the mounted recording medium 322, recording medium reading device 317 reads support program 370 stored in recording medium 322. The read support program 370 is stored in HDD 308.

Support program 370 is executed to implement a development environment for project data 250 including object 50 in support device 300. Recording medium 322 may be distributed in the state in which it stores support program 370 or the like executed by support device 300. Note that recording medium 322 is constituted of a general-purpose semiconductor storage device such as a secure digital (SD), a magnetic storage medium such as a flexible disk, an optical storage medium such as a compact disk read only memory (CD-ROM), and the like.

### <D. Functional Configuration>

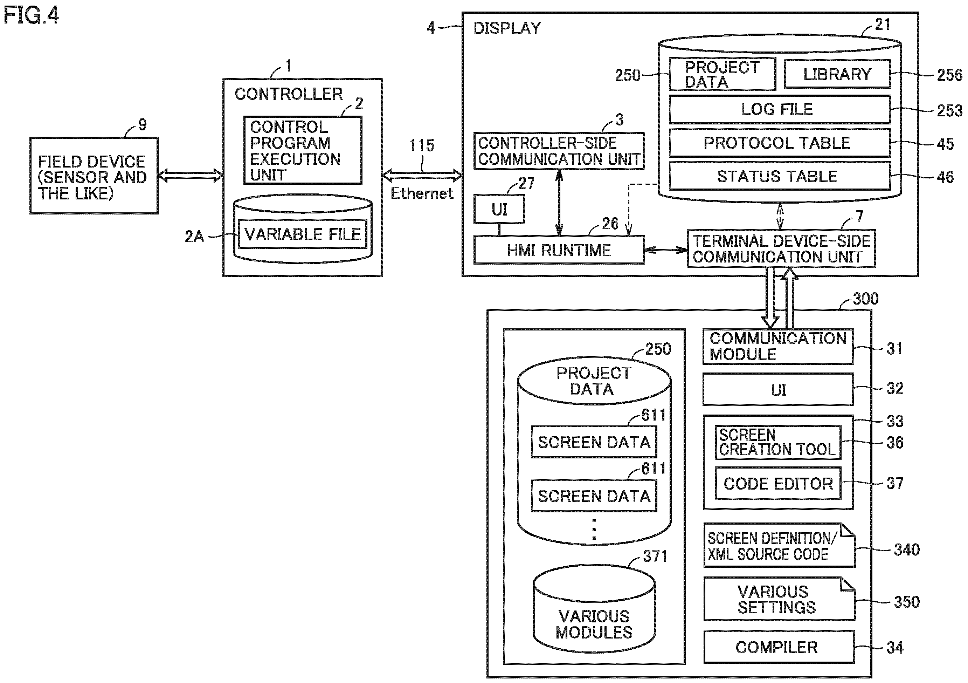

Fig. 4 is a diagram schematically showing a functional configuration of display 4 and support device 300 according to the first embodiment. Referring to Fig. 4, controller 1 configured to communicate with display 4 includes a control program execution unit 2 that acquires a state value of field device 9 or that calculates a control command for field device 9 by a control arithmetic operation based on the state value. Control program execution unit 2 executes a control program including ladder logic under the control of CPU unit 10.

Further, controller 1 includes a variable file 2A. The "field value" of the value set to each variable of variable file 2A includes: a value (a state value) indicating a result of the control of field device 9; and a value (a control command) of a result of the control arithmetic operation. In variable file 2A, these values are set to corresponding variables.

Display 4 includes: a controller-side communication unit 3 that controls communication interface 419 to communicate with controller 1; a terminal device-side communication unit 7 that controls communication interface 419 to communicate with support device 300; and a runtime 26 that is a module for executing screen display. When executing the screen display, runtime 26 searches a storage unit 21 configured to include flash ROM 414. A UI tool 27 is also included in association with runtime 26.

Storage unit 21 stores project data 250, a library 256 of objects, a log file 253 for various loggings of field values and the like exchanged through communication with controller 1, protocol table 45, and status table 46. Controller-side communication unit 3 and terminal device-side communication unit 7 have a function of generating a frame for transmission according to Ethernet or analyzing a received frame (extracting data from the frame, and the like).

Support device 300 in Fig. 4 has a module used to provide a development environment for creating screen data (project data 250). More specifically, support device 300 includes: project data 250; a storage unit corresponding to HDD 308 that stores various modules 371 used to create project data 250; a communication module 31 that controls USB interface 318; a user interface (UI) 32; a development support module 33 for a screen; and a compiler 34. User interface 32 is constituted of input unit 311 and display 314 shown in Fig. 3. Development support module 33 includes a screen creation tool 36 and a code editor 37. Development support module 33 is implemented by CPU 302 executing support program 370.

Project data 250 in the storage unit includes screen data 611 for each of one or more screens. Screen data 611 indicates the type, the position, the size, and the assigned variable of object 50 constituting a corresponding screen (and arranged on this screen).

In the present embodiment, the variable assigned to object 50 is data itself, a container or a storage area in which the data is stored, and the like. For example, the variable is data itself representing the state of field device 9 (see Fig. 1), a container or a storage area in which the data is stored, and the like. Typically, the variable includes a variable based on which a field value related to control of field device 9 is set. The values set at these variables also include values represented as structures or arrays.

Screen creation tool 36 of development support module 33 serves as a tool for editing the configuration of each of one or more screens displayed on display 4. Code editor 37 edits a source code. Further, development support module 33 generates: a source code 340 defining one or more screens displayed on display 4; and various settings 350 related to the screens. Source code 340 is described, for example, with the use of an extensible markup language (XML).

Compiler 34 compiles source code 340 to generate project data 250. The generated project data 250 is stored in the storage unit. In response to an instruction from the developer, project data 250 stored in the storage unit is transferred to display 4 through communication module 31.

Various modules included in support device 300 shown in Fig. 4 are implemented as programs executed by CPU 302, but may be implemented by a combination of programs and circuits (an application specific integrated circuit (ASIC), a field-programmable gate array (FPGA), and the like).

### <E. Functional Configuration Example of Display 4>

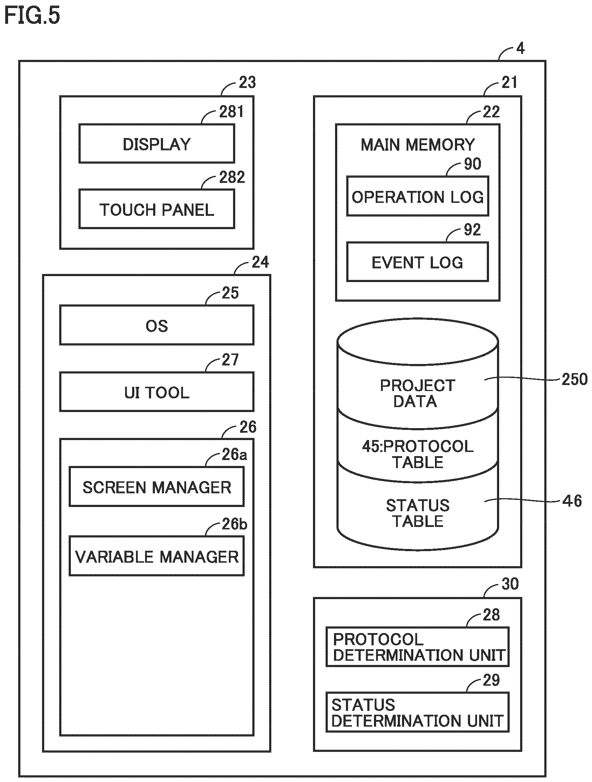

Fig. 5 is a schematic diagram showing a functional configuration example of display 4 according to the present embodiment. In the example shown in Fig. 5, functions related to screen display are mainly shown. Referring to Fig. 5, display 4 includes storage unit 21, a user interface 23, a control unit 24, and a processing module 30. Storage unit 21 is constituted of ROM 412, RAM 413, and flash ROM 414 shown in Fig. 2. User interface 23 is constituted of display 481 and touch panel 482 shown in Fig. 2. User interface 23 may include a mouse and a keyboard. Control unit 24 and processing module 30 are implemented by executing various programs including system program 270 by CPU 411 shown in Fig. 2.

Storage unit 21 includes a main memory 22, and stores project data 250, protocol table 45, and status table 46. Main memory 22 includes, for example, records of: operation log information 90 related to the operation on user interface 23; and an event log 92 indicating the status of occurrence of an event registered in advance.

Control unit 24 controls the operation of display 4. Control unit 24 includes an OS 25, a module of runtime 26, and a module of UI tool 27. OS 25 executes basic functions of display 4. The modules of runtime 26 include a screen manager 26a and a variable manager 26b.

Screen manager 26a creates a screen based on project data 250 and causes user interface 23 to display the created screen. Alternatively, when an event requiring screen transition occurs, screen manager 26a creates a screen as a transition destination based on project data 250 and causes user interface 23 to display the created screen.

From controller 1, variable manager 26b acquires the value of the variable assigned to object 50 constituting the screen. Screen manager 26a assigns the value of the variable acquired by variable manager 26b to the variable of object 50 of screen data 611 constituting project data 250.

Processing module 30 executes various processes. Processing module 30 includes modules of a protocol determination unit 28 that determines a communication protocol and a status determination unit 29.

Protocol determination unit 28 determines communication protocols used by controllers 1A, 1B, and 1C for communication with display 4, and then, registers the determination results in protocol table 45. Status determination unit 29 determines the states of communication of controllers 1A, 1B, and 1C with display 4, and then, registers the determination results in status table 46.

The modules of display 4 shown in Fig. 5 are implemented as programs executed by CPU 411, but may be implemented by a combination of programs and circuits (ASIC, FPGA, and the like).

### <F. Project Data and Screen Creation>

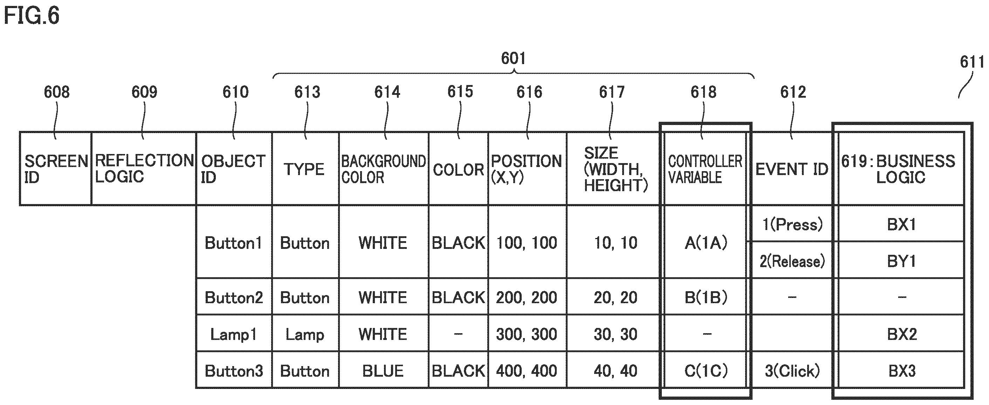

Fig. 6 is a diagram showing an example of screen data 611 according to the present embodiment. Referring to Fig. 6, a screen displayed on display 4 is created by screen manager 26a based on project data 250 including one or more pieces of screen data 611. Screen data 611 includes a screen ID 608 as an identifier of the screen and reflection logic 609. Screen data 611 further includes, in association with each of objects 50 arranged on the screen, an object ID 610 for identifying object 50, an attribute 601 indicating a specific attribute of object 50, an event ID 612 for identifying an event for object 50, and business logic 619. Reflection logic 609 and business logic 619 each are constituted of instruction codes executed to display a screen based on the screen data.

Attribute 601 includes an attribute ID corresponding to each of a plurality of types of attributes. The attribute ID includes: a type 613 of object 50; a background color 614 during display; a color 615 during display; a position 616 on the screen; a display size 617; and a controller variable 618 assigned to object 50. Some components may not have a particular attribute or attribute value. Further, screen data 611 stores attribute values in association with the respective attributes ID of the corresponding components. Controller variable 618 is indicated by a set of a variable name and an identifier (for example, an address on network 115) of a controller to which the variable is transmitted.

Reflection logic 609 includes logic that is executed to arrange objects on the screen that indicate information based on the types of communication protocols of all controllers 1 communicating with display 4.

Event ID 612 indicates, for example, the types of one or more user operations that can be accepted for object 50. The types of operations include, but are not limited to, clicking, releasing, pressing, and the like.

Business logic 619 includes an instruction code executed to arrange (display) a corresponding object 50 on the screen. For example, as to business logic 619, when an event indicated by the corresponding event ID 612 is detected for object 50 arranged on the screen based on screen data 611, CPU 411 (more specifically, runtime 26) executes business logic 619 corresponding to this event ID 612. Business logic 619 includes: logic (e.g., a program code) for transmitting and receiving a field value to and from controller 1; arithmetic logic (e.g., a program code) using the field value; logic (e.g., a program code) for controlling display of a corresponding object based on the result of the arithmetic operation; logic (e.g., a program code) for controlling display of the object according to a type of the operation (event ID 612) performed on the object; or the like.

CPU 411 executes business logic 619 to receive a field value from variable file 2A of controller 1 identified by controller variable 618 corresponding to object 50, executes the arithmetic logic based on the received field value, and changes the display state of object 50 based on the result of the arithmetic operation. For example, the attributes such as a color, a size, and a character of object 50 are changed based on the calculated values.

Further, when reflection logic 609 is executed, CPU 411 arranges (displays), on the screen, an object corresponding to the type of the communication protocol (HTTP or HTTPS) determined for controller 1 indicated by controller variables 618 of one or more objects 50 constituting the screen. Details of the process based on reflection logic 609 (hereinafter also referred to as a screen-by-screen reflection process) will be described later.

### (f1. Another Example of Project Data)

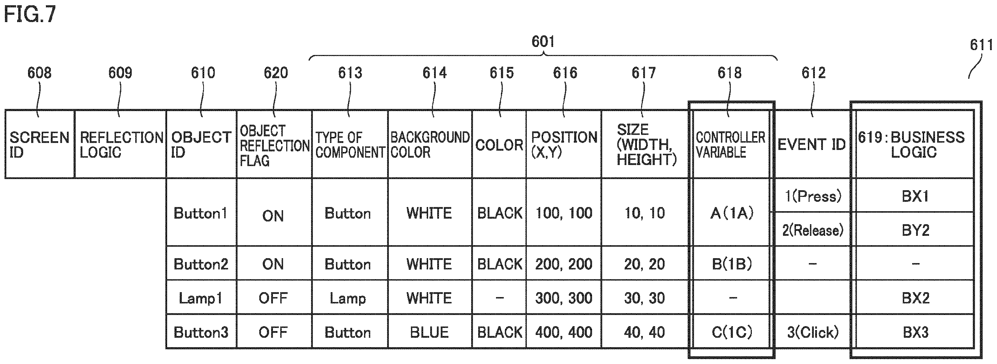

Fig. 7 is a diagram showing another example of screen data 611 according to the present embodiment. In screen data 611 in Fig. 6, an object reflection flag 620 is set for each object 50 constituting the screen. Since other items of project data 250 in Fig. 7 are the same as those in Fig. 6, the description thereof will not be repeated.

In Fig. 7, only for object 50 for which object reflection flag 620 is set to be "ON", the corresponding business logic 619 is executed with the use of the determination value of the communication protocol. Also, for object 50 for which object reflection flag 620 is set to be "OFF", the above-mentioned arithmetic operation is executed with no use of the determination value of the communication protocol.

More specifically, in the case where object reflection flag 620 indicates 1 (ON), when the communication protocol used for communication of controller variable 618 of object 50 is determined as HTTPS, then, business logic 619 of this object 50 is executed to calculate a predetermined attribute value, and an object based on this attribute value is arranged on the screen (this process will be hereinafter also referred to as an object-by-object reflection process). In contrast, in the case where screen reflection flag 610 indicates 0 (zero) (OFF), even if the communication protocol used for communication of controller variable 618 of object 50 is determined as HTTPS, the object-by-object reflection process is not executed even when business logic 619 is executed.

In the object-by-object reflection process, based on the identifier of controller 1 indicated by controller variable 618, CPU 411 searches protocol table 45 for the type of the communication protocol (HTTPS or HTTP) determined for controller 1 and thereby can acquire the type of the communication protocol.

When the screen based on screen data 611 in Fig. 7 is displayed, the object-by-object reflection process is executed. Thereby, for each object 50 displayed on the display screen, the user can be provided with information indicating whether or not the field value indicated by each object 50 has been received through HTTPS communication, i.e., whether or not security is ensured.

Note that the configuration of screen data 611 is not limited to the configuration in Fig. 6 or 7, but other items related to display of a screen (an object) may be included.

### <G. Screen Creation Process>

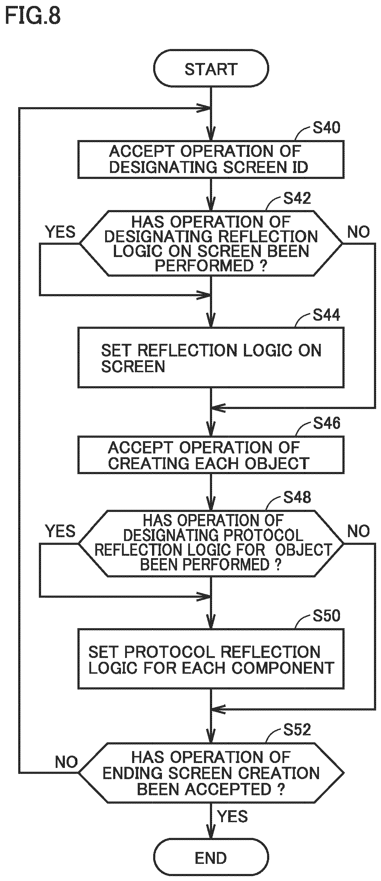

Fig. 8 is a flowchart illustrating a schematic process of screen creation according to the present embodiment. In the screen creation, the user uses screen creation tool 36 through UI 32 of support device 300 to create project data 250 of the screen. The process in Fig. 8 is executed by CPU 302 as screen creation tool 36.

First, the user designates screen ID 608 of the screen, and CPU 302 accepts this operation and sets the designated screen ID 608 in project data 250 (step S40). CPU 302 determines whether or not the operation of designating reflection logic 609 is accepted (step S42). Then, when CPU 302 determines that the operation has been accepted (YES in step S42), it sets the accepted reflection logic 609 in project data 250 of the screen (step S44).

When CPU 302 determines that the operation of designating reflection logic 609 has not been accepted (NO in step S42), it sets attribute 601, event ID 612, and business logic 619 for each object based on the user operation (step S46).

CPU 302 determines whether or not the operation of designating reflection logic 609 is accepted for each object 50 (step S48). Then, when CPU 302 determines that the operation has been accepted (YES in step S48), it sets the accepted value for object reflection flag 620 of each object of project data 250 of the screen (step S50).

When CPU 302 determines that the operation of designating object reflection flag 620 has not been accepted (NO in step S48), it determines whether or not the operation of ending the screen creation has been accepted (step S52). When CPU 302 determines that the operation of ending the screen creation has been accepted (YES in step S52), the process ends (YES in step S52). However, when CPU 302 determines that the operation has not been accepted (NO in step S52), the process returns to step S40, and the process in step S40 and the steps subsequent thereto is similarly performed for the next screen. The created project data 250 is debugged and compiled, and then, stored.

As shown in Fig. 8, when project data 250 of the screen is created, both or one of reflection logic 609 and object reflection flag 620 may be set for screen data 611 of each screen.

### <H. Output Example >

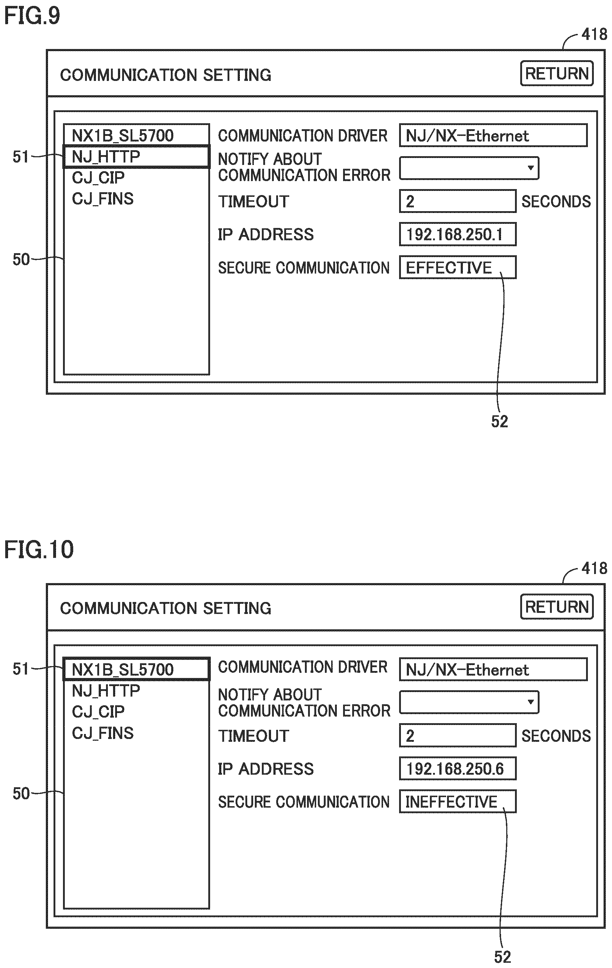

Figs. 9 to 15 are diagrams illustrating display examples of the screens according to the present embodiment. These screens each are displayed when the user operates runtime 26 of display 4 via UI tool 27 to execute project data 250 of the screen.

Figs. 9 and 10 each show an example of a menu screen of display 4. On the screen, object 50 of a list showing identifiers of controller 1 capable of communicating with display 4 is arranged on the left side, and an object 52 showing the type of the communication protocol determined for controller 1 corresponding to an identifier 51 selected and operated in the list is arranged on the right side.

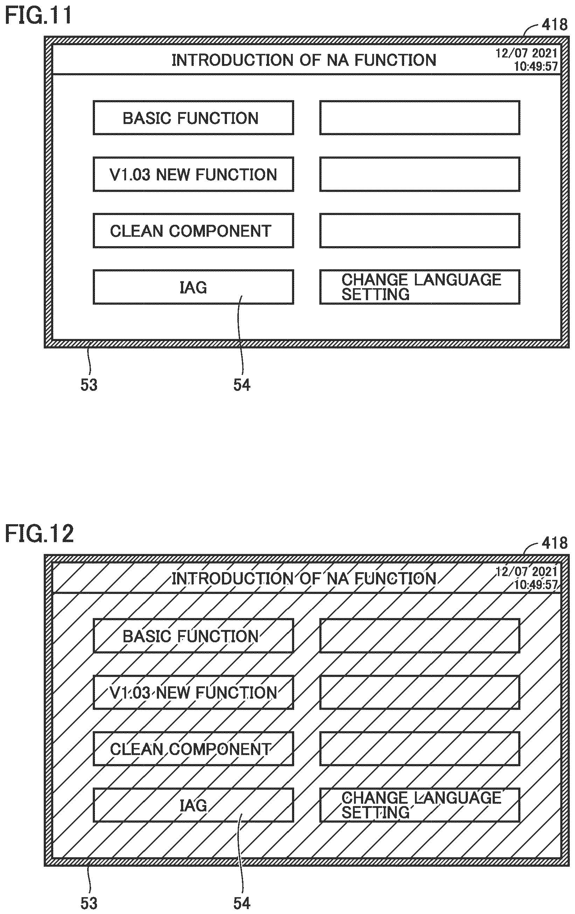

Figs. 11, 12, and 13 show display examples in the case where a screen-by-screen reflection process based on reflection logic 609 of project data 250 is performed. For example, in the screen-by-screen reflection process, CPU 411 executes reflection logic 609 to acquire information representing an aggregation of the types (hereinafter referred to as an aggregation type) of the communication protocols of all controllers 1 with which display 4 communicates, and then, arranges an object showing the acquired aggregation type on the screen. For example, when controllers 1A and 1B are determined as using HTTPS and controller 1C is determined as using HTTP, an object representing non-secure as an aggregation type is arranged on the screen based on the state in which at least one of the controllers uses HTTP (non-secure).

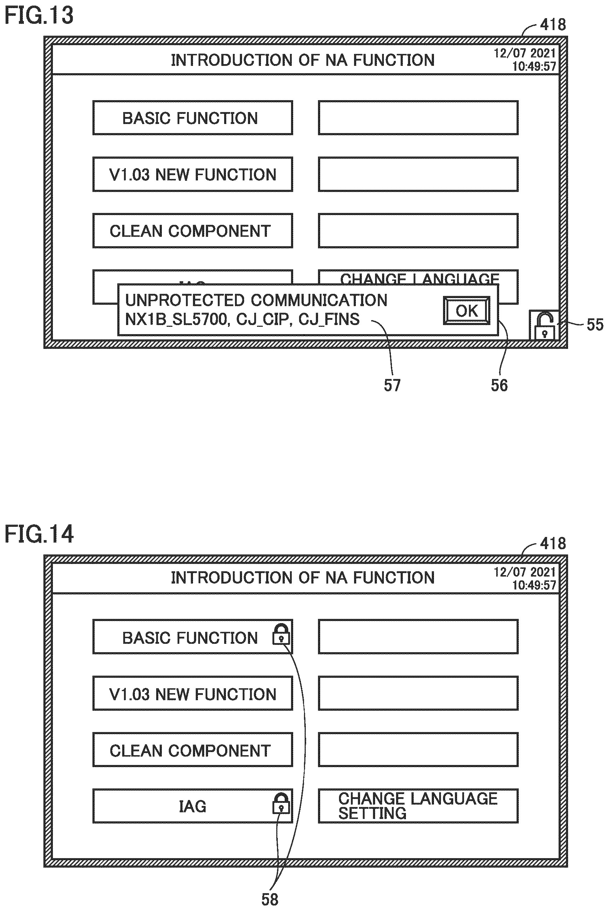

As objects arranged in this way, in Fig. 11, an object 53 displayed with a frame different in color (e.g., red) on a screen 54 is arranged. In Fig. 12, a semi-transparent rectangular object shown by diagonal lines and displayed with a different color tone on the screen is arranged to be superimposed on other objects arranged on the screen. In Fig. 13, an object representing an icon 55 is arranged at a corner of the screen. Icon 55 shows a mark of an unlocked state, and thereby represents a non-secure state. In Fig. 13, when icon 55 is touched for operation, an object 56 of a message box is displayed. In object 56, an object 57 representing information of controller 1 using a predetermined type of communication protocol is arranged on the screen. In other words, in object 56, for example, information (identifier) 57 of controller 1 determined as using communication protocol HTTP of a non-secure communication is displayed.

According to the objects representing the aggregation types in Figs. 11 and 12, the user can easily visually recognize the aggregation type (whether secure or non-secure). Further, according to the object in Fig. 13, the user can check the aggregation type as well as the information about the communication protocols of controllers 1 aggregated according to the aggregation type.

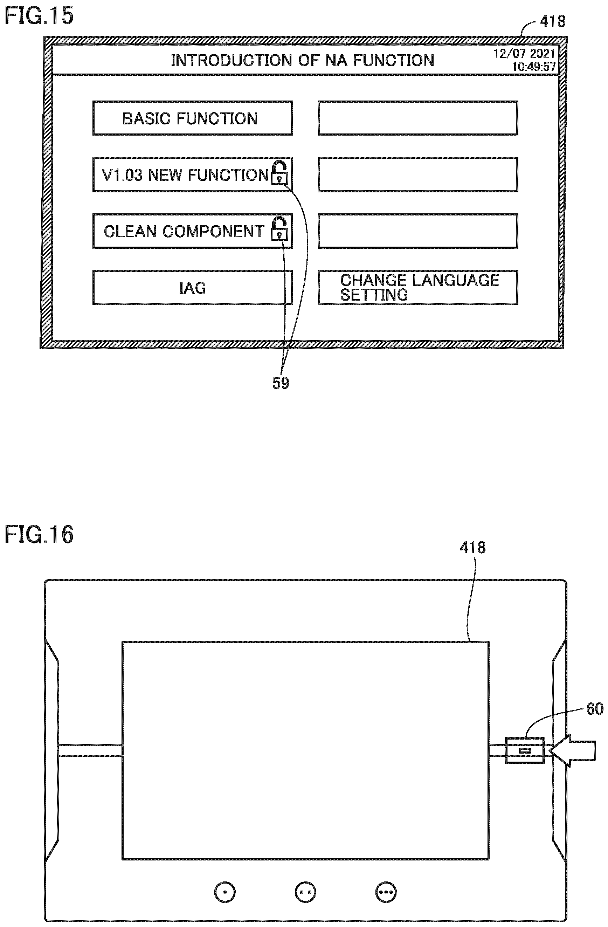

Figs. 14 and 15 show display examples in the case where the object-by-object reflection process based on object reflection flag 620 of project data 250 is executed. For example, in the object-by-object reflection process, for each of the objects (a button, a lamp, and the like) arranged on the screen of the display, according to the type of the communication protocol determined for a target controller 1 in accordance with object reflection flag 620 set by the user, i.e., according to HTTPS (secure) or HTTP (non-secure), the object representing the type of this communication protocol is made different. In Fig. 14, an object 58 representing a mark of a locked state is displayed only on an object representing a field value exchanged through communication with controller 1 performing a secure communication. In contrast, in Fig. 15, an object 59 representing a mark of an unlocked state is displayed only on an object representing a field value exchanged through communication with controller 1 performing a non-secure communication. Object 58 or 59 should only be displayed in association with the object representing the field value, and the arrangement of both objects is not limited to the arrangement shown in Fig. 14 or 15.

The output unit of the type or the aggregation type of the communication protocol determined for controller 1 is not limited to touch screen 418, but may be another output unit as shown in Fig. 16. Fig. 16 is a diagram showing an output example according to the present embodiment. In Fig. 16, the aggregation type is output through the use of a light emitting diode (LED) 60 attached to a housing of display 4. For example, the aggregation type is presented through the use of a Run LED provided in display 4. The Run LED is lighted in green when display 4 operates normally, and lighted in red when an abnormality occurs in display 4. The Run LED is controlled to be lighted by a combination of the operation state of display 4 and the aggregation type. For example, when the aggregation type indicates non-secure (HTTP), CPU 411 causes the LED to be lighted in orange in the case of a normal operation and to be lighted in red in the case of occurrence of an abnormality. When the aggregation type indicates secure (HTTPS), CPU 411 causes the LED to blink on and off. The lighting control of the Run LED shown in Fig. 16 may be performed in parallel with display of the screen shown in Figs. 9 to 15.

### <I. Selection of Object >

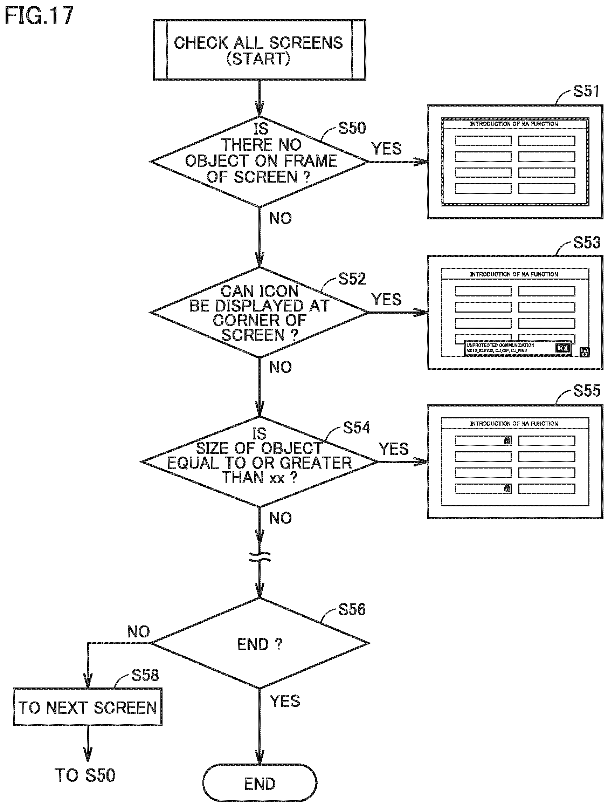

Fig. 17 is a diagram showing an example of a screen selection process according to the present embodiment. For displaying (arranging) an object of the aggregation type shown in each of Figs. 11, 12, and 13, based on the state of arrangement of other objects on the screen that is being displayed, an object to be arranged on this screen may be determined from among the plurality of types of these objects. One example of such a selective determination process is shown in Fig. 17. The process in Fig. 17 is executed by CPU 411 as screen manager 26a.

CPU 411 scans the data (project data 250) on the screen that is being displayed, and, based on the result of scanning, analyzes the arrangement of the objects on the screen from positions 616 and sizes 617 of the plurality of objects 50 constituting the screen. When it is determined based on the result of analysis that there is no object 50 arranged at a position of the frame of the screen (YES in step S50), it is determined to display the object in Fig. 11 (step S51). When it is determined that there is object 50 arranged at a position of the frame of the screen (NO in step S50) and also when it is determined based on the result of analysis that there is an area in which the object of icon 55 can be arranged at a prescribed position on the screen (YES in step S52), then it is determined to display the objects in Fig. 13 (step S53). Further, when it is determined that there is no area in which the object of icon 55 can be arranged at a prescribed position on the screen (NO in step S52) and also when it is determined based on the result of analysis that the area occupied by the object on the screen exceeds a threshold value (YES in step S54), then, it is determined to display the objects in Fig. 12 (step S55). Thereafter, it is determined whether or not to end the image display process (step S56). If it is determined not to end the image display process (NO in step S56), the process proceeds to the next screen display process (step S58). If it is determined to end the image display process (YES in step S56), the process is ended.

The process in Fig. 17, which is executed for each screen to be displayed when a screen is displayed, may be executed not when the screen is displayed but when the screen is created. In other words, in the screen creation process, the process in Fig. 17 may be executed, and based on the result of execution, screen data 611 of each screen may be additionally provided with data designating which one of the arrangements in Figs. 11, 12, and 13 to be employed to display an object representing the aggregation type.

### <J. Determination of Communication Protocol>

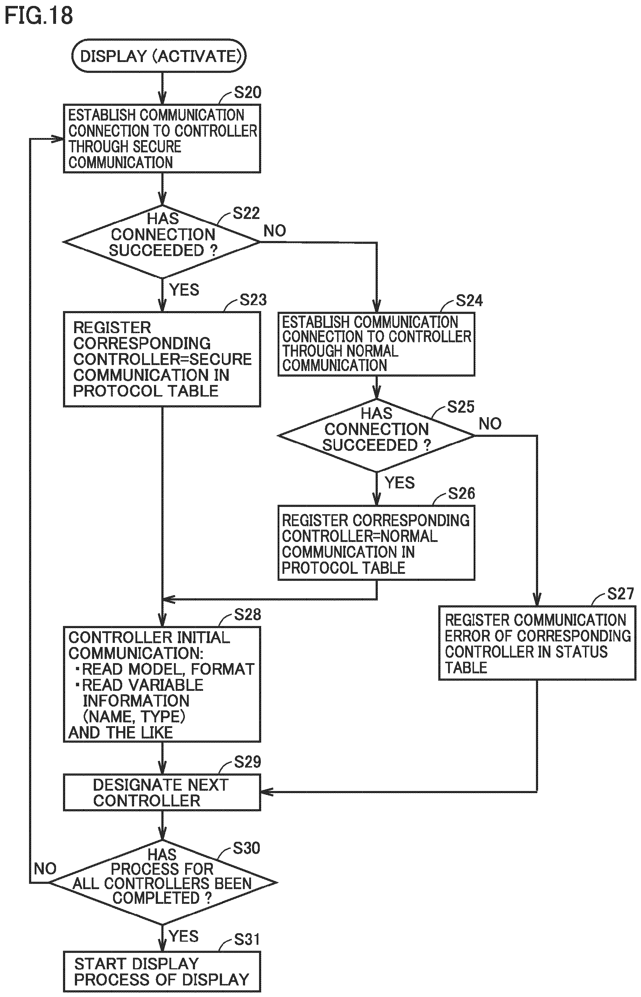

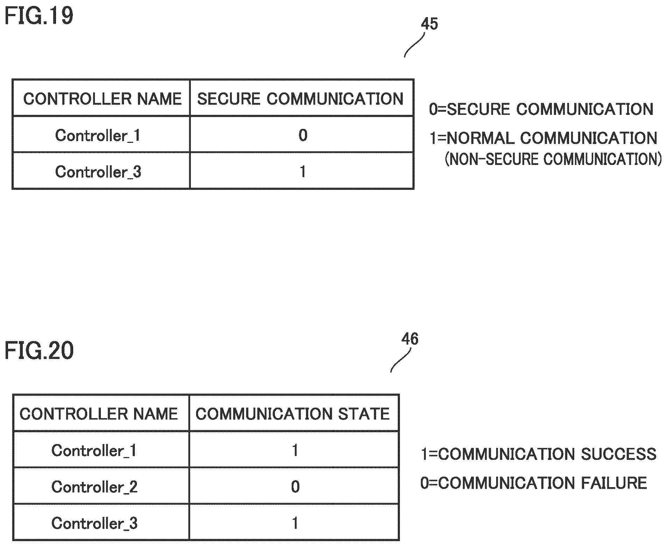

Fig. 18 is a flowchart of a communication protocol determination process according to the present embodiment. Fig. 19 is a diagram showing an example of protocol table 45 according to the present embodiment. Fig. 20 is a diagram showing an example of status table 46 according to the present embodiment. The process in Fig. 19 is executed by CPU 4011 as protocol determination unit 28 and status determination unit 29.

In the present embodiment, IP addresses of respective controllers 1A, 1B, and 1C are acquired in advance for display 4 for communication.

When display 4 is activated, CPU 411 generates a URL obtained by adding "https" to the IP address of controller 1A, and starts a session through the use of this URL, to thereby establish a communication connection to controller 1A through a secure communication (step S20).

When controller 1A uses the secure communication protocol of HTTPS for communication with display 4, controller 1A responds to a session start request from display 4. Upon reception of the response to the session start request, display 4 determines that the connection has succeeded (YES in step S22), and registers, in protocol table 45, the identifier (controller name) of controller 1A in association with the result of determination (a value = 0) that controller 1A uses the secure communication protocol (step S23).

When a session is established, CPU 411 performs an initial communication (reading of the model and the format, reading of variable information (the name and the type), and the like) with controller 1A and stores the obtained result (step S28). CPU 411 designates a controller, to which a session start request is to be transmitted, as a next controller 1B (step S29), and determines whether or not the process has been completed for all the controllers (step S30). If the process has not been completed (NO in step S30), CPU 411 returns the process to step S0, and performs the process in step S20 and the steps subsequent thereto for the next controller. On the other hand, when it is determined that the process has been completed for all the controllers (YES in step S30), the above-described screen display process is started (step S31).

Returning to step S22, when display 4 cannot receive the response to the session start request and determines that the connection has not succeeded (NO in step S22), then, CPU 411 generates a URL obtained by adding "http" to the IP address of controller 1A and starts the session through the use of this URL, to thereby establish a connection to controller 1A through a non-secure normal communication (step S24). When controller 1A uses the HTTP communication protocol for communication with display 4, controller 1A responds to the session start request from display 4. Upon reception of the response to the session start request, display 4 determines that the connection has succeeded (YES in step S25), and registers, in protocol table 45, the identifier (the controller name) of controller 1A in association with the result of determination (a value = 1) that controller 1A uses a non-secure communication protocol (step S26). Then, the process proceeds to step S28.

Further, when display 4 determines by status determination unit 29 that display 4 cannot receive the response to the session start request and the connection has not succeeded (YES in step S25), display 4 causes status determination unit 29 to register, in status table 46, the identifier (the controller name) of controller 1A in association with a communication failure (a value = 0) (step S27). Then, the process proceeds to step S29.

Figs. 19 and 20 show examples of protocol table 45 and status table 46 generated by the process in Fig. 18. For example, since controller 1B having a controller name of Controller 2 was powered off, the communication protocol to be used has not been determined in protocol table 45 and status table 46, and the communication state is set to a communication failure (= 0).

Based on the information of status table 46, display 4 may retry the process in Fig. 18 for controller 1B of Controller_2 for which the communication protocol has not been determined.

### <K. Page Switching Process>

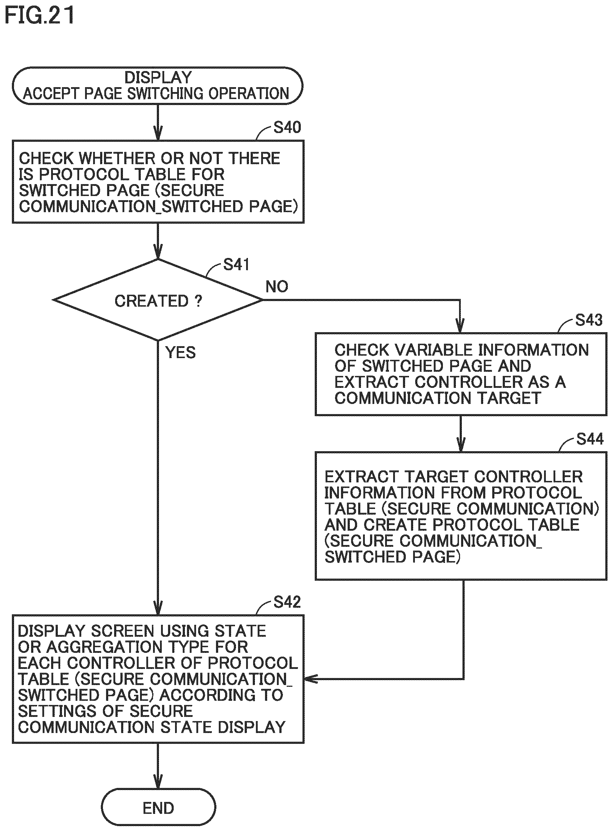

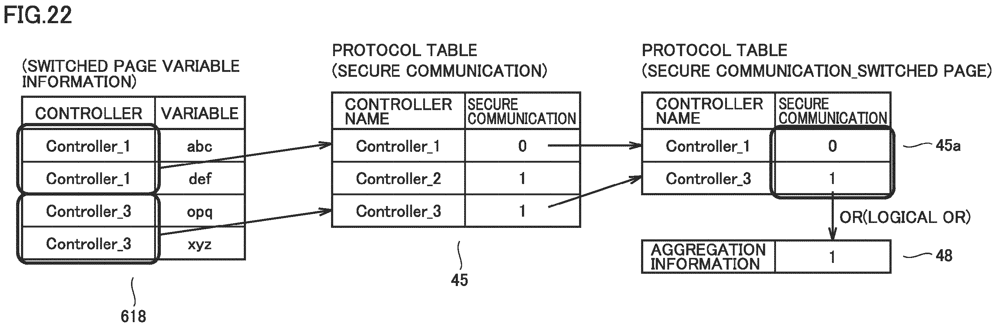

In the present embodiment, the screen to be displayed on display 4 is managed on a page-by-page basis, and the screen to be displayed is switched by a page switching process. Fig. 21 is a flowchart of the page switching process according to the present embodiment. Fig. 22 is a diagram showing an example of a change in data in tables according to the present embodiment. CPU 411 can execute the page switching process as screen manager 26a and manage protocol table 45 on a page-by-page basis.

Referring to Fig. 22, when CPU 411 receives a page switching operation through UI tool 27, it determines whether or not a protocol table 45a (see Fig. 22) corresponding to a switched page has been created (step S40). If protocol table 45a has been created (YES in step S40), CPU 411 creates an aggregation type 48 based on the value (value: 1 or 0) indicating whether or not each of controllers 1 shown in protocol table 45a uses a secure communication. Then, according to aggregation type 48, CPU 411 arranges an object indicating aggregation type 48 (one or a combination of two or more of the objects in Figs. 11 to 13) on the screen of the switched page, and then displays this screen (step S42).

In this way, aggregation type 48 indicating the communication protocol aggregated on a screen-by-screen basis can be displayed as an object. In other words, the types of the communication protocols determined for controllers 1 communicating the field values represented by objects 50 arranged on the screen are shown in an aggregated manner on the screen.

In step S42, the screen of the switched page may be displayed as shown in Fig. 14 or 15. In other words, on the screen of the switched page, object 58 or 59 of the icon for the secure or non-secure communication may be arranged in association with object 50 based on the type of the communication protocol used by the controller indicated by controller variable 618 assigned to the object.

Returning to step S40, when CPU 411 determines that protocol table 45a corresponding to the switched page has not yet been created (NO in step S40), it proceeds the process to step S43 in order to create protocol table 45a. CPU 411 searches project data 250 in the switched page for controller variable 618 (see Fig. 22) of each object 50, and extracts the identifier of the controller from the searched controller variable 618 (step S43). For example, Controller_1 and Controller_3 as controller names are extracted.

CPU 411 searches protocol table 45 based on the extracted two controller names, and acquires the types of communication protocols (a non-secure communication and a secure communication) used by these controllers. Thereby, protocol table 45a of the switched page is obtained (step S44). Then, the process proceeds to step S42.

When the page switching operation is accepted as described above, the object indicating aggregation type 48 can be arranged on the screen of the switched page according to aggregation type 48 based on protocol table 45a of the switched page (screen).

Aggregation type 48 of the communication protocols (secure communication: 0, non-secure communication: 1) of the plurality of controllers is calculated, for example, by a logical OR operation of the value (0 or 1) indicating the type of the communication protocol, but the method of deriving a representative by aggregating the types of the communication protocols of the plurality of controllers is not limited to such a logical OR operation.

### <L. Process of Allocating Variables to Objects on Screen>

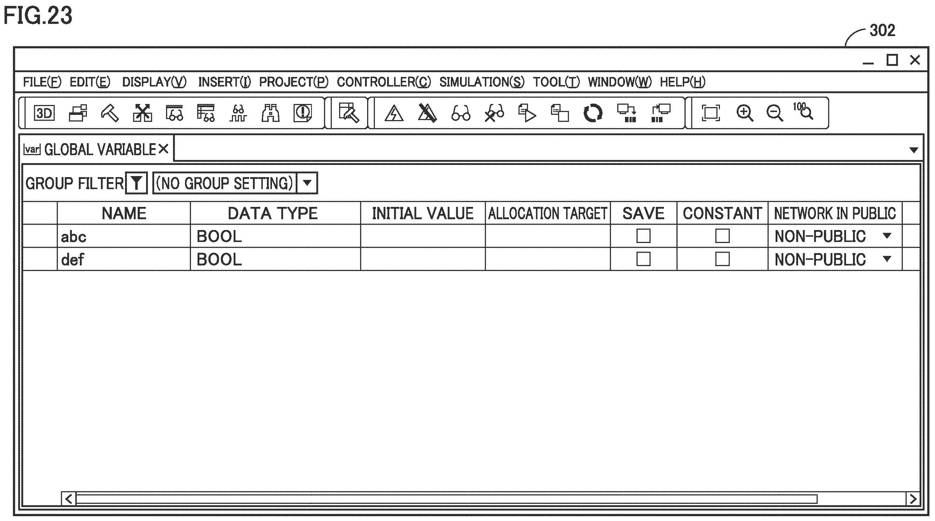

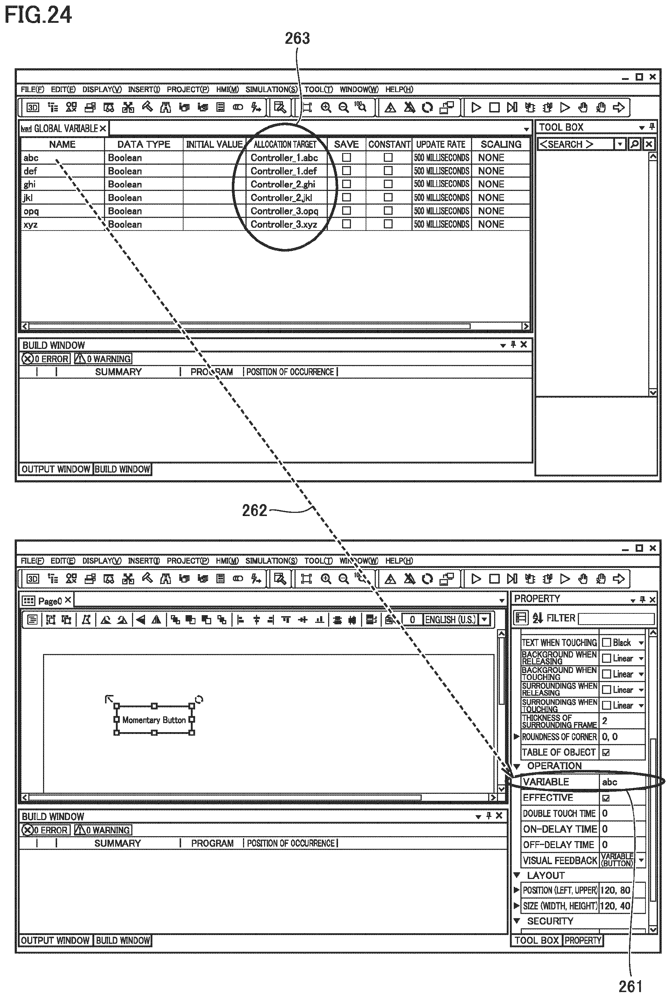

Figs. 23 and 24 each are a diagram illustrating a process of allocating variables to objects according to the present embodiment. When project data 250 is created by operating screen creation tool 36, UI screens in Figs. 23 and 24 are presented in order to allocate controller variables 618 of objects 50. The user operates UI 32 to select, on the UI screen in Fig. 23, a variable to be used for allocation from among the global variables of controller 1A. Also for other controllers 1B and 1C, through a similar UI screen, the user selects a variable to be used for allocation from among the variables handled by these controllers 1B and 1C.

On the UI screen in Fig. 24, the controller variables selected on the UI screen in Fig. 23 are displayed in a list 263. When creating object 50 (Momentary Button) on the lower stage in Fig. 24, the user selects a controller variable (Controller_1.abc) in list 263 and performs an operation of dragging the selected variable to a setting field 261. Through this operation, the variable of controller 1 (Controller_1.abc) can be allocated as controller variable 618 to object 50 (Momentary Button). Controller variable 618 can be allocated also to other objects 50 through the same operation.

### <M. Other Display Examples of Screen>

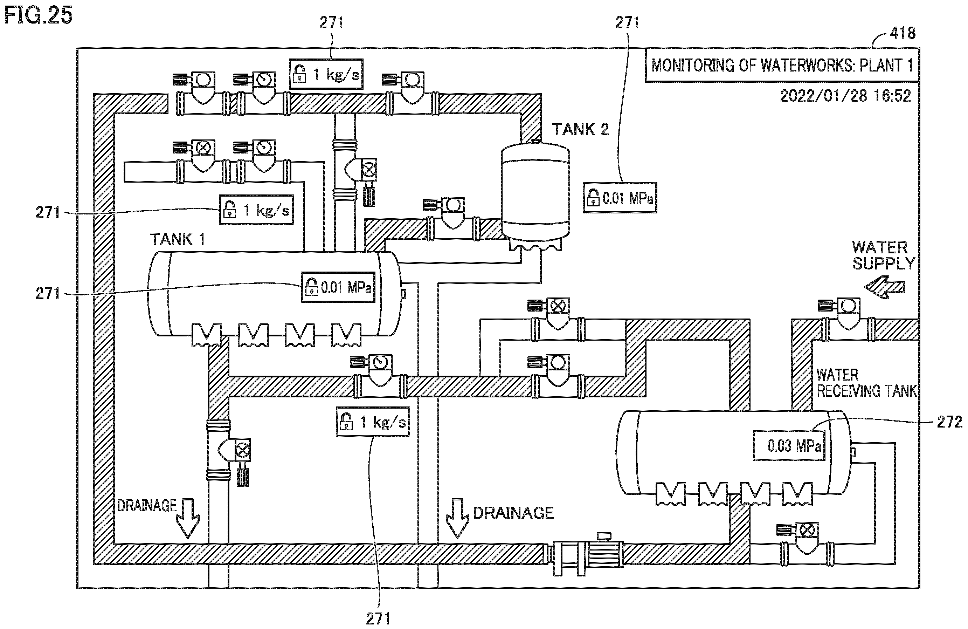

In display 4, when the object-by-object reflection process is performed, the field value exchanged through communication with the controller and the type of the communication protocol determined for this controller may be represented in object 50 arranged on the screen, as shown in Fig. 25.

Fig. 25 is a diagram showing a display example of another screen according to the present embodiment. Fig. 25 is an example of a monitor screen of an industrial plant, in which objects 50 such as tanks, valves, and pipes, and objects 271 and 272 indicating field values are arranged on the screen. The field value is indicated by the controller variable allocated to a corresponding object 50, and is arranged at a position associated with this corresponding object 50, for example, at the nearest position.

In each of objects 271 and 272, a mark of the locked state or the unlocked state is affixed to the field value. Such marks provide information as to whether each field value is exchanged through communication between display 4 and controller 1 through a secure communication protocol or a non-secure communication protocol.

### <N. Program>

A program and data for implementing each module shown in Fig. 5 and included in display 4 according to the present embodiment may be recorded in a computer-readable recording medium including a recording medium such as a memory card 421, a flexible disk, a CD-ROM, a read only memory (ROM), a random access memory (RAM), a flash ROM 414, or a hard disc drive (HDD) that are equipped in display 4, such that the program and data can also be provided as a program product.

Further, the above-mentioned program or data can be downloaded from a network through a network controller such as communication interface 419 or USB interface 420, and thereby can also be provided to display 4.

Further, the program and data for implementing each module shown in Fig. 4 and included in support device 300 according to the present embodiment can be recorded in a computer-readable recording medium including a recording medium such as recording medium 322, a flexible disk, a CD-ROM, a read only memory (ROM), a random access memory (RAM), or a hard disc drive (HDD) that are equipped in support device 300, such that the program and data can also be provided as a program product.

Further, the above-mentioned program or data can be downloaded from a network through a network controller such as USB interface 318, and thereby can also be provided to support device 300.

The above-mentioned recording medium for providing a program or data to display 4 or support device 300 is a medium that accumulates information such as a program by an electrical, magnetic, optical, mechanical, or chemical action such that a computer or some other device, machine, or the like can read this information such as a program.

### <O. Supplementary Notes>

### [Configuration 1]

An information processing apparatus (4) comprising:
a communication unit (419) configured to communicate with a control device (1, 1A, 1B, 1C) configured to control a target (9);
a communication protocol determination unit (28) configured to determine, based on information exchanged through communication with the control device, a type of a communication protocol used for the communication by the control device; and
an output unit (418, 60) configured to output the determined type of the communication protocol.

### [Configuration 2]

The information processing apparatus according to Configuration 1, wherein
the output unit includes a display unit (418) configured to display a screen constituted of one or more objects, and
the objects include an object representing the type of the communication protocol to be output.

### [Configuration 3]

The information processing apparatus according to Configuration 1 or 2, wherein, when the communication unit requests the control device to establish a connection for communication (S20), the communication protocol determination unit determines, based on the information exchanged through communication with the control device, the type of the communication protocol used for the communication by the control device.

### [Configuration 4]

The information processing apparatus according to any one of Configurations 1 to 3, wherein the type of the communication protocol used for the communication by the control device includes a secure communication protocol (HTTPS) or a non-secure communication protocol (HTTP).

### [Configuration 5]

The information processing apparatus according to any one of Configurations 1 to 4, wherein
the communication unit is configured to be capable of communicating with a plurality of the control devices,
the communication protocol determination unit is configured to determine, based on information exchanged through communication between each of the control devices and the information processing apparatus, the type of the communication protocol used for the communication by each of the control devices, and
the type of the communication protocol to be output includes an aggregation type (48) that is an aggregation of the types of the communication protocols determined for the control devices.

### [Configuration 6]

The information processing apparatus according to Configuration 5, wherein
the information exchanged through communication with the control device includes control information related to control of the target,
the output unit includes a display unit configured to display a screen constituted of one or more objects, and
the one or more objects include an object (271, 272) representing the control information.

### [Configuration 7]

The information processing apparatus according to Configuration 6, wherein the aggregation type includes a communication protocol that is an aggregation of the types of the communication protocols each determined for the control device configured to communicate the control information represented by each of the objects constituting the screen.

### [Configuration 8]

The information processing apparatus according to Configuration 6 or 7, wherein
an object representing the aggregation type includes different types of objects, and,
based on a state of arrangement of other objects on a screen, the information processing apparatus determines an object representing the aggregation type to be arranged on the screen from among the different types of objects.

### [Configuration 9]

The information processing apparatus according to Configuration 8, wherein
the different types of objects include at least two of:
an object (53) having a predetermined color representing a frame of the screen;
a semi-transparent object arranged to be superimposed on other objects arranged on the screen; and
an object of an icon (55) representing the aggregation type, the object of the icon being arranged at a predetermined position on the screen.

### [Configuration 10]

The information processing apparatus according to Configuration 9, wherein, in a case where the object of the icon representing the aggregation type is arranged on the screen, when the icon is operated, an object (56) representing information (57) of the control device using a predetermined type of communication protocol is arranged on the screen.

### [Configuration 11]

The information processing apparatus according to Configuration 10, wherein
the object arranged on the screen includes an object (271) representing:
control information related to control of the target and exchanged through communication with the control device; and
the type of the communication protocol determined for the control device.

### [Configuration 12]

The information processing apparatus according to any one of Configurations 6 to 11, further comprising a storage unit (414) configured to store screen data (250, 611) for displaying the screen, wherein
the screen data includes:
   an attribute (601) of each object arranged on the screen, the attribute being related to display; and
   logic (619, 609) executed to determine an attribute value that is a value of the attribute, and
the logic includes logic (609) configured to acquire the aggregation type and arrange an object of the acquired aggregation type on the screen.

### [Configuration 13]

An information processing apparatus (300) configured to create screen data for displaying the screen according to any one of Configurations 6 to 12.

### [Configuration 14]

A program for causing a computer (411) to execute an information processing method, the information processing method comprising:
communicating with a control device configured to control a target (S20);
determining, based on information exchanged through communication with the control device, a type of a communication protocol used by the control device for the communication (S23, S26); and
outputting the determined type of the communication protocol (S31).

It should be understood that the embodiments disclosed herein are illustrative and non-restrictive in every respect. The scope of the present invention is defined by the terms of the claims, rather than the description above, and is intended to include any modifications within the meaning and scope equivalent to the terms of the claims.

### REFERENCE SIGNS LIST

1, 1A, 1B, 1C controller, 2 control program execution unit, 2A variable file, 4 display, 9 field device, 15 detection sensor, 16 relay, 17 relay, 21 storage unit, 22 main memory, 23, 32 user interface, 24 control unit, 26 runtime, 26a screen manager, 26b variable manager, 27 UI tool, 28 protocol determination unit, 29 status determination unit, 30 processing module, 31 communication module, 33 development support module, 34 compiler, 36 screen creation tool, 37 code editor, 45, 45a, 48a protocol table, 46 status table, 48 aggregation type, 51 identifier, 611 screen data, 111, 115 network, 250 project data, 251 library, 300 support device, 322 recording medium, 340 source code, 370 support program, 418 touch screen, 421 memory card, 609 reflection logic, 610 screen reflection flag, 618 controller variable, 619 business logic, 620 object reflection flag, SYS control system.

## Claims

1. An information processing apparatus comprising:
a communication unit configured to communicate with a control device configured to control a target;
a communication protocol determination unit configured to determine, based on information exchanged through communication with the control device, a type of a communication protocol used for the communication by the control device; and
an output unit configured to output the determined type of the communication protocol.

2. The information processing apparatus according to claim 1, wherein
the output unit includes a display unit configured to display a screen constituted of one or more objects, and
the objects include an object representing the type of the communication protocol to be output.

3. The information processing apparatus according to claim 1 or 2, wherein, when the communication unit requests the control device to establish a connection for communication, the communication protocol determination unit determines, based on the information exchanged through communication with the control device, the type of the communication protocol used for the communication by the control device.

4. The information processing apparatus according to any one of claims 1 to 3, wherein the type of the communication protocol used for the communication by the control device includes a secure communication protocol or a non-secure communication protocol.

5. The information processing apparatus according to any one of claims 1 to 4, wherein
the communication unit is configured to be capable of communicating with a plurality of the control devices,
the communication protocol determination unit is configured to determine, based on information exchanged through communication between each of the control devices and the information processing apparatus, the type of the communication protocol used for the communication by each of the control devices, and
the type of the communication protocol to be output includes an aggregation type that is an aggregation of the types of the communication protocols determined for the control devices.

6. The information processing apparatus according to claim 5, wherein
the information exchanged through communication with the control device includes control information related to control of the target,
the output unit includes a display unit configured to display a screen constituted of one or more objects, and
the one or more objects include an object representing the control information.

7. The information processing apparatus according to claim 6, wherein the aggregation type includes a communication protocol that is an aggregation of the types of the communication protocols each determined for the control device configured to communicate the control information represented by each of the objects constituting the screen.

8. The information processing apparatus according to claim 6 or 7, wherein
an object representing the aggregation type includes different types of objects, and,
based on a state of arrangement of other objects on a screen, the information processing apparatus determines an object representing the aggregation type to be arranged on the screen from among the different types of objects.

9. The information processing apparatus according to claim 8, wherein
the different types of objects include at least two of:
an object having a predetermined color representing a frame of the screen;
a semi-transparent object arranged to be superimposed on other objects arranged on the screen; and
an object of an icon representing the aggregation type, the object of the icon being arranged at a predetermined position on the screen.

10. The information processing apparatus according to claim 9, wherein, in a case where the object of the icon representing the aggregation type is arranged on the screen, when the icon is operated, an object representing information of the control device using a predetermined type of communication protocol is arranged on the screen.

11. The information processing apparatus according to claim 10, wherein
the object arranged on the screen includes an object representing:
control information related to control of the target and exchanged through communication with the control device; and
the type of the communication protocol determined for the control device.

12. The information processing apparatus according to any one of claims 6 to 11, further comprising a storage unit configured to store screen data for displaying the screen, wherein
the screen data includes:
an attribute of each object arranged on the screen, the attribute being related to display; and
logic executed to determine an attribute value that is a value of the attribute, and
the logic includes logic configured to acquire the aggregation type and arrange an object of the acquired aggregation type on the screen.

13. An information processing apparatus configured to create screen data for displaying the screen according to any one of claims 6 to 12.

14. A program for causing a computer to execute an information processing method, the information processing method comprising:
communicating with a control device configured to control a target;
determining, based on information exchanged through communication with the control device, a type of a communication protocol used for the communication by the control device; and
outputting the determined type of the communication protocol.
